# EUROPEAN PATENT APPLICATION

(11) **EP 4 358 218 A1**
(43) Date of publication of application: **24.04.2024**
(21) Application number: 22949675.7
(22) Date of filing: 08.07.2022
(51) Int. Cl.: H01M 10/0567, H01M 10/0525

(54) **ELECTROLYTE SOLUTION AND LITHIUM-ION BATTERY COMPRISING SAME**

(71) Applicant: Contemporary Amperex Technology Co., Limited, Ningde, Fujian 352100 (CN)
(72) Inventor: WANG, Xihui, Ningde, Fujian 352100 (CN); XU, Wenzhu, Ningde, Fujian 352100 (CN); WU, Zeli, Ningde, Fujian 352100 (CN); WU, Canlong, Ningde, Fujian 352100 (CN); LIU, Di, Ningde, Fujian 352100 (CN); ZOU, Qifan, Ningde, Fujian 352100 (CN)
(74) Representative: Gong, Jinping
(86) International application number: PCT/CN2022/104685
(87) International publication number: WO 2024/007318

(57) **Abstract**

The embodiments of the present application provide an electrolyte solution and a lithium-ion battery comprising the same. The electrolyte solution includes a solvent, a lithium salt and a first additive, and the first additive has a molecular formula of 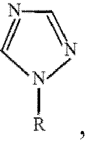 wherein R is at least one of an H element, a halogen element or an alkyl group having 1 to 3 carbon atoms. The electrolyte solution provided in the embodiments of the present application has the advantages of having a long shelf life, avoiding the problem of the performance decline of lithium-ion batteries due to deterioration of electrolyte solutions, being capable of inhibiting an increase of internal resistance of the lithium-ion batteries in low-temperature cycles, and improving the performance of the lithium-ion batteries.

## Description

### TECHNICAL FIELD

The present application relates to the technical field of batteries, and particularly relates to an electrolyte solution and a lithium-ion battery comprising the same.

### BACKGROUND

In recent years, lithium-ion batteries are applied widely in many fields such as energy storage power systems like wind power stations, hydroelectric power stations, thermal power stations and solar power stations, electric bicycles, electric motorcycles, electric cars, military equipment and aerospace. With the great development of lithium-ion batteries, the demands for energy density, cycling performance, security performance and the like of lithium-ion batteries are higher.

In the production of lithium-ion batteries, it is essential to add an electrolyte solution. However, because of a short shelf life, an existing electrolyte solution may cause the performance decline of the batteries after long-term use. Thus, how to prolong the shelf life of the electrolyte solution is a crucial technical problem in lithium-ion battery technologies.

### SUMMARY

The present application is provided based on the above-mentioned subjects and aims to provide an electrolyte solution having a long shelf life to avoid the problem of the performance decline of lithium-ion batteries due to deterioration of electrolyte solutions, and meanwhile, the electrolyte solution can inhibit an increase of internal resistance of the lithium-ion batteries in low-temperature cycles and improve the battery performance.

A first aspect of the present application provides an electrolyte solution, which comprises a solvent, a lithium salt and a first additive, and the first additive has a molecular formula of 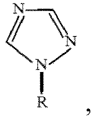 wherein R is at least one of an H element, a halogen element or an alkyl group having 1 to 3 carbon atoms.

In the embodiment of the present application, the electrolyte solution comprises the solvent, the lithium salt and the first additive, wherein the solvent is used to dissolve a solute, the lithium salt is used to help lithium ions in the lithium-ion battery to be dissociated, and the first additive is used to improve the performance of the electrolyte solution. The first additive is added to inhibit the decomposition of the lithium salt to avoid the performance decline of the lithium-ion battery caused by polymerization of the solvent of the electrolyte solution because of a decomposition product of the lithium salt. Meanwhile, the first additive has a good film-forming ability at an interface between positive and negative electrodes and can effectively inhibit an increase of internal resistance of the lithium-ion battery in low-temperature cycles, thereby improving the performance thereof.

In any implementation, the R is an H element, and the first additive is 1,2,4-triazole.

In the embodiment of the present application, the 1,2,4-triazole has a good effect on inhibiting the decomposition of the lithium salt, is low in cost and readily available and can be widely used in mass production.

In any implementation, based on 100 parts by weight of the electrolyte solution, the amount of the first additive is 0.1-3 parts by weight.

In the embodiment of the present application, the amount of the electrolyte solution is 100 parts by weight, and the amount of the first additive is 0.1-3 parts by weight, i.e., 0.1 wt%-3 wt% of the first additive is added to the electrolyte solution to achieve an optimum effect on inhibiting the deterioration of the electrolyte solution and the increase of the internal resistance of the lithium-ion battery in low-temperature cycles.

In any implementation, the electrolyte solution further comprises a second additive which is ethylene sulfate.

In the embodiment of the present application, firstly, the first additive is added to the electrolyte solution to inhibit the decomposition of the lithium salt and the increase of the internal resistance of the lithium-ion battery in low-temperature cycles; secondly, the second additive, namely ethylene sulfate, is added to assist the first additive to together form a good SEI film and together slow the increase of the internal resistance of the lithium-ion battery in low-temperature cycles, thereby further improving the performance of the lithium-ion battery.

In any implementation, based on 100 parts by weight of the electrolyte solution, the amount of the second additive is 0.1-1 part by weight.

In the embodiment of the present application, the amount of the solvent is 100 parts by weight, and the amount of the second additive is 0.1-1 part by weight, i.e., 0.1 wt%-1 wt% of the second additive is added to the electrolyte solution to achieve an optimum effect on assisting in film forming and slow the increase of the internal resistance of the lithium-ion battery in low-temperature cycles.

In any implementation, a molar concentration of the lithium salt in the solvent is 0.8-1.5 mol/L.

In the embodiment of the present application, the lithium salt is used to dissociate the lithium ions in the lithium-ion battery to fix the concentration of the lithium salt in the solvent to be 0.8-1.5 mol/L to help the lithium salt to achieve an optimum effect on dissociating the lithium ions.

In any implementation, the solvent comprises at least one of diethyl carbonate, methyl ethyl carbonate, propylene carbonate, dimethyl carbonate, ethylene carbonate, propylene carbonate and ethyl propionate.

In the embodiment of the present application, by using the solvents such as ethylene carbonate and diethyl carbonate, the lithium salt can be well dissolved to maintain stable ion transmission in the lithium-ion battery.

In any implementation, the solvent comprises ethylene carbonate and diethyl carbonate, and a mass ratio of the ethylene carbonate to the diethyl carbonate is 3:7.

In the embodiment of the present application, by using the solvents of the ethylene carbonate and the diethyl carbonate at the mass ratio of 3:7, the lithium salt can be well dissolved, the cost can be reduced, and extensive use in mass production is facilitated.

A second aspect of the present application provides a lithium-ion secondary battery, comprising the electrolyte solution according to the first aspect of the present application.

According to the present application, the first additive is added to the electrolyte solution so that the shelf life of the electrolyte solution can be effectively prolonged, and the problem of the performance decline of lithium-ion batteries due to deterioration of electrolyte solutions can be avoided; meanwhile, the electrolyte solution can inhibit the increase of the internal resistance of the lithium-ion batteries in low-temperature cycles and improve the performance of the lithium-ion batteries.

### DESCRIPTION OF THE DRAWINGS

To more clearly illustrate the technical solutions of the embodiments of the present application, the accompanying drawings required by the embodiments of the present application are introduced briefly below. Apparently, the accompanying drawings depicted below are merely some examples of the present application, for those skilled in the art, they can also obtain other accompanying drawings based on the accompanying drawings without paying creative work.
FIG. 1 is a flow diagram of a method for preparing an electrolyte solution according to one implementation of the present application;
FIG. 2 is a flow diagram of a method for preparing an electrolyte solution according to another implementation of the present application;
FIG. 3 is a square structural schematic diagram of a lithium-ion battery according to an implementation of the present application;
FIG. 4 is a schematic diagram of a lithium-ion battery module according to an implementation of the present application;
FIG. 5 is a schematic diagram of a lithium-ion battery pack according to an implementation of the present application;
FIG. 6 is an exploded diagram of a lithium-ion battery pack according to an implementation of the present application.

### DESCRIPTION OF EMBODIMENTS

The implementations of the electrolyte solution and the lithium-ion battery comprising the same according to the present application are illustrated in detail below by properly referring to the accompanying drawings, but there will be situations that unnecessary detailed descriptions are omitted. For example, a detailed description of well-known matters or a repetitive description of actually identical structures will be omitted. In addition, the accompanying drawings and the following description are provided to make those skilled in the art fully understand the present application. It is not intended to limit the subjects that are recorded in claims.

All the implementations and alternative implementations mentioned herein can be combined mutually to form a new technical solution unless otherwise specified.

In general, the lithium-ion battery comprises a positive electrode plate, a negative electrode plate, an electrolyte solution and a separator film. In the charging process, lithium ions are inserted and extracted back and forth between the positive electrode plate and the negative electrode plate. The electrolyte solution plays a role in conducting the lithium ions between the positive electrode plate and the negative electrode plate. The separator film is disposed between the positive electrode plate and the negative electrode plate to mainly prevent a short circuit between a positive electrode and a negative electrode and allow the lithium ions to pass through.

It should be understood that the "lithium insertion" and "insertion" process described in the present application means a process that the lithium ions are inserted into a cathode material and an anode material as a result of an electrochemical reaction; the "extraction", "lithium extraction" and "extraction and insertion" process in the present application means a process that the lithium ions are extracted from a cathode material and an anode material because of the electrochemical reaction.

In chemical reactions of the lithium-ion battery, the internal resistance of the battery cannot be neglected, and an electric potential of the battery and an actual voltage of the battery are two distinct concepts. An effective voltage externally provided by the battery is equal to the electric potential only in case of an external impedance being infinitely high and the internal resistance of the battery being neglectable. In other words, as long as the internal resistance of the battery is non-neglectable, discharge voltages of the battery are lower than the electric potential, and charging voltages are higher than the electric potential. The phenomenon that the voltage deviates from a theoretical electric potential is called polarization of the battery, and may also be popularly called voltage drop or overvoltage. The higher the resistance, the higher the voltage drop under a certain current, to maintain the current, the higher the energy loss of the battery.

Thus, to reduce polarization of the battery, the internal resistance of the battery needs to be reduced. The resistance is related to the number of carriers per unit volume. The more the number of the carriers per unit volume, the lower the resistance. Therefore, stable ion transmission in the battery can be maintained by adding the electrolyte solution.

However, the decomposition product of the lithium salt in an existing electrolyte solution makes the solvent in the electrolyte solution polymerize, which leads to a short shelf life of the electrolyte solution and causes wastage of the electrolyte solution. Furthermore, the deteriorated electrolyte solution may easily cause poor performance of the lithium-ion battery and a great loss.

### [Electrolyte solution]

The electrolyte solution plays a role in conducting the ions between the positive electrode plate and the negative electrode plate. According to the electrolyte solution provided in the present application, the first additive is added to solve the problem of wasting the electrolyte solution due to the deterioration of electrolyte solutions; the electrolyte solution provided in the present application can inhibit the increase of the internal resistance of the lithium-ion batteries in low-temperature cycles, thereby improving the performance of the lithium-ion batteries. Specifically, the embodiment of the present application provides an electrolyte solution comprising:
a solvent, a lithium salt and a first additive, and the first additive has a molecular formula of 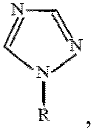
wherein R is at least one of an H element, a halogen element or an alkyl group having 1 to 3 carbon atoms.

Specifically, the lithium salt is a medium used to transfer ions in the lithium-ion battery, and the lithium salt may comprise at least one selected from LiPF₆, LiBF₆, LiSbF₆, LiAsF₆ and LiClF₆. The following description takes lithium hexafluorophosphate as an example but does not limit types of the lithium salt.

In the embodiment of the present application, by adding the first additive, the electrolyte solution can inhibit the polymerization of the solvent of the electrolyte solution caused by the decomposition product of the lithium salt, thereby avoiding the performance decline of the lithium-ion battery caused by the deterioration of the electrolyte solution. Meanwhile, the first additive has a good film-forming ability at the interface between the positive and negative electrodes and can effectively inhibit the increase of the internal resistance of the lithium-ion battery in low-temperature cycles, thereby improving the performance thereof.

In some embodiments, R is an H element, and the first additive is 1,2,4-triazole.

The 1,2,4-triazole has a good effect on inhibiting the decomposition of the lithium salt, is low in cost and readily available and can be widely used in mass production.

In some embodiments, based on 100 parts by weight of the electrolyte solution, the amount of the first additive is 0.1-3 parts by weight.

The solvent is used to dissolve the solute. A proper number of the first additive is added to relieve the decomposition of lithium hexafluorophosphate in the electrolyte solution and prolong the shelf life of the electrolyte solution.

In the embodiment of the present application, the amount of the electrolyte solution is 100 parts by weight, and the amount of the first additive is 0.1-3 parts by weight so that the first additive can achieve an optimum effect on inhibiting the deterioration of the electrolyte solution and the increase of the internal resistance of the battery in low-temperature cycles.

In some implementations, the electrolyte solution further comprises a second additive which is ethylene sulfate.

Specifically, when serving as an additive of the electrolyte solution of the lithium-ion battery, the ethylene sulfate can inhibit a decrease in an initial capacity of the battery, increase an initial discharge capacity, reduce swelling of batteries placed at a high temperature and increase charge-discharge properties and a cycle index of the battery.

In the embodiment of the present application, firstly, the first additive, for example, 1,2,4-triazole, is added to the electrolyte solution to inhibit the decomposition of the lithium salt and the increase of the internal resistance of the battery in low-temperature cycles; secondly, the second additive, namely ethylene sulfate, is added to assist the first additive to together form a good SEI film, together slow the increase of the internal resistance of the lithium-ion battery in low-temperature cycles and increase the cycle index of the lithium-ion battery, thereby further improving the performance of the lithium-ion battery.

In some implementations, based on 100 parts by weight of the electrolyte solution, the addition amount of the second additive is 0.1-1 part by weight.

A proper number of the second additive is added to help to form the SEI film and improve the performance of the lithium-ion battery.

In the embodiment of the present application, based on 100 parts by weight of the electrolyte solution, the addition amount of the second additive is 0.1-1 part by weight so that the second additive can achieve an optimum effect on assisting in film forming and slow the increase of the internal resistance of the lithium-ion battery in low-temperature cycles.

In some implementations, a molar concentration of the lithium salt in the solvent is 0.8-1.5 mol/L.

In the embodiment of the present application, the lithium salt is used to dissociate the lithium ions in the lithium-ion battery to fix the concentration of the lithium salt in the solvent to be 0.8-1.5 mol/L to help the lithium salt to achieve an optimum effect on dissociating the lithium ions.

In some implementations, the solvent comprises at least one of diethyl carbonate, methyl ethyl carbonate, propylene carbonate, dimethyl carbonate, ethylene carbonate, propylene carbonate and ethyl propionate.

In the embodiment of the present application, by using the solvents such as ethylene carbonate and diethyl carbonate, the lithium hexafluorophosphate can be well dissolved to maintain stable ion transmission in the lithium-ion battery.

In some implementations, the solvent comprises ethylene carbonate and diethyl carbonate, and a mass ratio of the ethylene carbonate to the diethyl carbonate is 3:7.

In the embodiment of the present application, by using the solvents of the ethylene carbonate and the diethyl carbonate at the mass ratio of 3:7, the lithium salt can be well, the cost can be reduced, and extensive use in mass production is facilitated.

In some implementations, the electrolyte solution may also comprise some other additives, for example, which may be a negative electrode film-forming additive and a positive electrode film-forming additive, and may also comprise additives capable of improving some performance, for example, an additive for improving overcharge performance of the battery, an additive for improving high-temperature or low-temperature performance of the battery, etc.

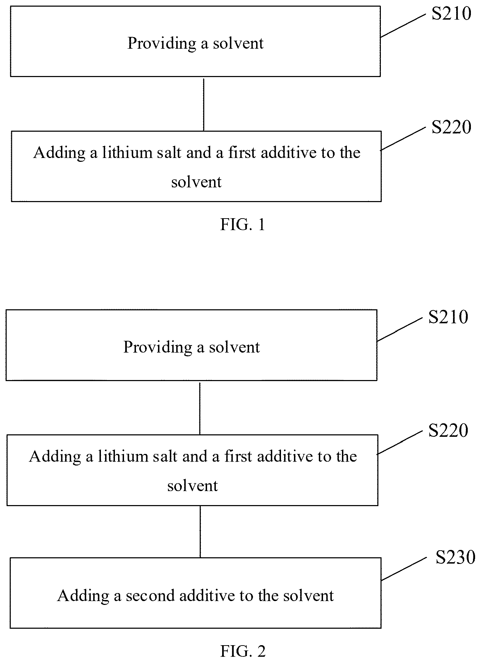

In addition, the embodiment of the present application further provides a method for preparing the electrolyte solution. Specifically, in an embodiment, as shown in FIG. 1, the method 200 comprises:
210: providing a solvent; and
220: adding a lithium salt and a first additive to the solvent.

The first additive has a molecular formula of 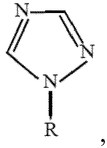 wherein R is at least one of an H element, a halogen element or an alkyl group having 1 to 3 carbon atoms.

In some implementations, based on 100 parts by weight of the electrolyte solution, the amount of the first additive is 0.1-3 parts by weight.

In some implementations, as shown in FIG. 2, the method 200 further comprises:
230: adding a second additive to the solvent, the second additive being ethylene sulfate.

In some implementations, based on 100 parts by weight of the electrolyte solution, the amount of the second additive is 0.1-1 part by weight.

In some implementations, the molar concentration of the lithium salt in the solvent is 0.8-1.5 mol/L.

In some implementations, the providing the solvent comprises providing at least one of diethyl carbonate, methyl ethyl carbonate, propylene carbonate, dimethyl carbonate, ethylene carbonate, ethyl acetate and ethyl propionate.

In some implementations, the providing the solvent comprises providing ethylene carbonate and diethyl carbonate, and the mass ratio of the ethylene carbonate to the diethyl carbonate is 3:7.

### [Positive electrode plate]

The positive electrode plate comprises a positive electrode current collector and a positive electrode film disposed on at least one surface of the positive electrode current collector, and the positive electrode film comprises a positive electrode active material.

As an example, the positive electrode current collector has two surfaces opposite in the thickness direction thereof. The positive electrode film is disposed on any one or both of the two opposite surfaces of the positive electrode current collector.

In some implementations, the positive electrode current collector may adopt a metal foil or a composite current collector. For example, the metal foil may adopt an aluminum foil. The composite current collector may comprise a high-polymer material base layer and a metal layer formed on at least one surface of the high-polymer material base layer. The composite current collector may be formed by forming metal materials (such as aluminum, aluminum alloy, nickel, nickel alloy, titanium, titanium alloy, silver and silver alloy) on high-polymer material base materials (such as polypropylene (PP), polyethylene terephthalate (PET), polybutylene terephthalate (PBT),
polystyrene (PS) and polyethylene (PE)).

In some implementations, the positive electrode active material may adopt a positive electrode active material for the lithium-ion battery known in the field. As an example, the positive electrode active material may comprise at least one of the following materials: lithium-containing phosphates with an olivine structure, lithium transitional metal oxides and respective modified compounds thereof. However, the present application does not limit these materials and may also adopt other traditional materials that can be used as the positive electrode active material of the lithium-ion battery. These positive electrode active materials may be separately used and may also be used in combination of two or more thereof. Among them, an example of the lithium transitional metal oxides includes but is not limited to at least one of a lithium cobalt oxide (such as LiCoO₂), a lithium nickel oxide (such as LiNiO₂), a lithium manganese oxide (such as LiMnO₂ and LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also called NCM333 for short), LiNi_{0.5}Co_{0.2}Mn_{0.3}O₂ (also called NCM523 for short), LiNi_{0.5}Co_{0.25}Mn_{0.25}O₂ (also called NCM211 for short), LiNi_{0.6}Co_{0.2}Mn_{0.2}O₂(also called NCM622 for short) and LiNi_{0.8}Co_{0.1}Mn_{0.1}O₂ (also called NCM811 for short)), a lithium nickel cobalt aluminum oxide (such as LiNi_{0.85}Co_{0.15}Al_{0.05}O₂) and modified compounds thereof. An example of the lithium-containing phosphates with an olivine structure may include but is not limited to at least one of lithium iron phosphate (such as LiFePO₄ (also called LFP for short)), a composite material of lithium iron phosphate and carbon, lithium manganese phosphate (such as LiMnPO₄), a composite material of lithium manganese phosphate and carbon, lithium iron manganese phosphate and a composite material of lithium iron manganese phosphate and carbon.

In some implementations, the positive electrode film also optionally comprises a binder. As an example, the binder may comprise at least one of polyvinylidene difluoride (PVDF), polytetrafluoroethylene (PTFE), vinylidene fluoride-polytetrafluoroethylene-propylene terpolymer, vinylidene fluoride-hexafluoropropylene-polytetrafluoroethylene terpolymer, polytetrafluoroethylene-hexafluoropropylene copolymer and fluorine-containing acrylate resin.

In some implementations, the positive electrode film also optionally comprises a conductive agent. As an example, the conductive agent may comprise at least one of superconducting carbon, acetylene black, carbon black, Ketjen black, carbon dots, carbon nanotubes, graphene and carbon nanofiber.

In some implementations, the positive electrode plate may be prepared through the following steps: dispersing the foregoing components for preparing the positive electrode plate such as the positive electrode active material, the conductive agent, the binder and any other components, into the solvent (such as N-methyl pyrrolidone) to form a positive electrode slurry; and coating the positive electrode slurry onto the positive electrode current collector, and conducting drying, cold pressing and so on to obtain the positive electrode plate.

### [Negative electrode plate]

The negative electrode plate comprises a negative electrode current collector and a negative electrode film disposed on at least one surface of the negative electrode current collector, and the negative electrode film comprises a negative electrode active material.

As an example, the negative electrode current collector has two surfaces opposite in the thickness direction thereof. The negative electrode film is disposed on any one or both of the two opposite surfaces of the negative electrode current collector.

In some implementations, the negative electrode current collector may adopt a metal foil or a composite current collector. For example, the metal foil may adopt a copper foil. The composite current collector may comprise a high-polymer material base layer and a metal layer formed on at least one surface of the high-polymer material base layer. The composite current collector may be formed by forming metal materials (such as copper, copper alloy, nickel, nickel alloy, titanium, titanium alloy, silver and silver alloy) on high-polymer material base materials (such as polypropylene (PP), polyethylene terephthalate (PET), polybutylene terephthalate (PBT),
polystyrene (PS) and polyethylene (PE)).

In some implementations, the negative electrode active material may adopt a negative electrode active material for the lithium-ion battery known in the field. As an example, the negative electrode active material may comprise at least one of the following materials: artificial graphite, natural graphite, soft carbon, hard carbon, a silica-based material, a tin-based material, lithium titanate, etc. The silica-based material may be at least one selected from monatomic silicon, silicon-oxygen compounds, a silicon-carbon compound, a silicon-nitrogen compound and a silicon alloy. The tin-based material may be at least one selected from monatomic tin, a tin-oxygen compound and a tin alloy. However, the present application does not limit these materials and may also adopt other traditional materials that can be used as the negative electrode active material of the lithium-ion battery. These negative electrode active materials may be separately used and may also be used in combination of two or more thereof.

In some implementations, the negative electrode film also optionally comprises a binder. The binder may be at least one selected from styrene butadiene rubber (SBR), polyacrylic acid (PAA), polyacrylic acid sodium (PAAS), polyacrylamide (PAM),
polyvinyl alcohol (PVA), sodium alginate (SA), polymethacrylic acid (PMAA) and carboxymethyl chitosan (CMCS).

In some implementations, the negative electrode film also optionally comprises a conductive agent. The conductive agent may be at least one selected from superconducting carbon, acetylene black, carbon black, Ketjen black, carbon dots, carbon nanotubes, graphene and carbon nanofiber.

In some implementations, the negative electrode film further optionally comprises other auxiliaries such as a thickening agent (such as sodium carboxymethyl cellulose (CMC)), etc.

In some implementations, the negative electrode plate may be prepared through the following steps: dispersing the foregoing components for preparing the negative electrode plate such as the negative electrode active material, the conductive agent, the binder and any other components, into the solvent (such as deionized water) to form a negative electrode slurry; and coating the negative electrode slurry onto the negative electrode current collector, and conducting drying, cold pressing and so on to obtain the negative electrode plate.

### [Separator film]

In some implementations, a secondary battery further comprises a separator film. The present application has no special limitation to types of the separator film and can adopt any known separator film with a porous structure having good chemical stability and mechanical stability.

In some implementations, the separator film is made of at least one material selected from glass fiber, non-woven fabric, polyethylene, polypropylene and polyvinylidene difluoride. The separator film may be a monolayer film and may also be a multi-layer composite film without special restrictions. When the separator film is a multi-layer composite film, all layers of materials may be the same or different without special restrictions.

In some implementations, the positive electrode plate, the negative electrode plate and the separator film can be made into an electrode assembly through a winding process or a stacking process.

In some implementations, the lithium-ion battery may comprise an outer packaging. The outer packaging can be used for packaging the electrode assembly and an electrolyte.

In some implementations, the outer packaging of the lithium-ion battery may be a hard shell such as a hard plastic shell, an aluminum shell, a steel shell, etc. The outer packaging of the lithium-ion battery may be a soft packaging such as a bag-type soft packaging. The soft packaging may be made of plastics such as polypropylene, polybutylene terephthalate and polybutylene succinate.

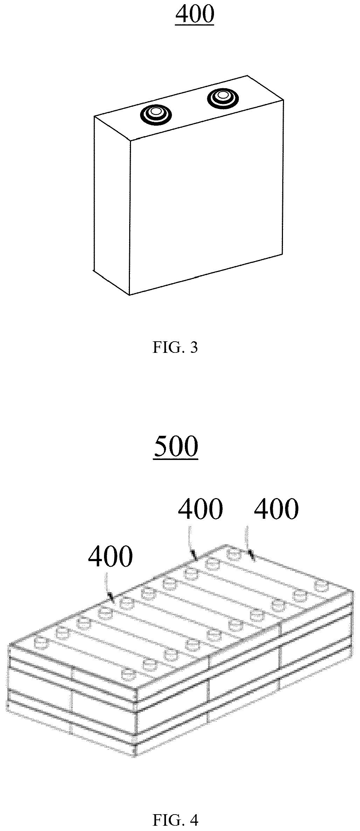

The present application has no special limitations to the shapes of the lithium-ion battery which can be cylindrical, square or in any other shape. For example, FIG. 3 shows a lithium-ion battery 400 with a square structure as an example.

FIG. 4 shows a battery module 500 as an example. Referring to FIG. 4, in the battery module 500, a plurality of lithium-ion batteries 400 may be arranged in sequence in the length direction of the battery module 500, and certainly, may be arranged in any other ways. Further, the plurality of lithium-ion batteries 400 can be fixed through fasteners.

Optionally, in an embodiment, the battery module 500 may comprise an outer shell provided with an accommodating space, and the plurality of lithium-ion batteries 400 are accommodated in the accommodating space.

Optionally, in an embodiment, the foregoing battery module may also be assembled into a battery pack. The number of the battery modules contained in the battery pack may be one or more, which can be chosen by those skilled in the art according to the application and capacity of the battery pack.

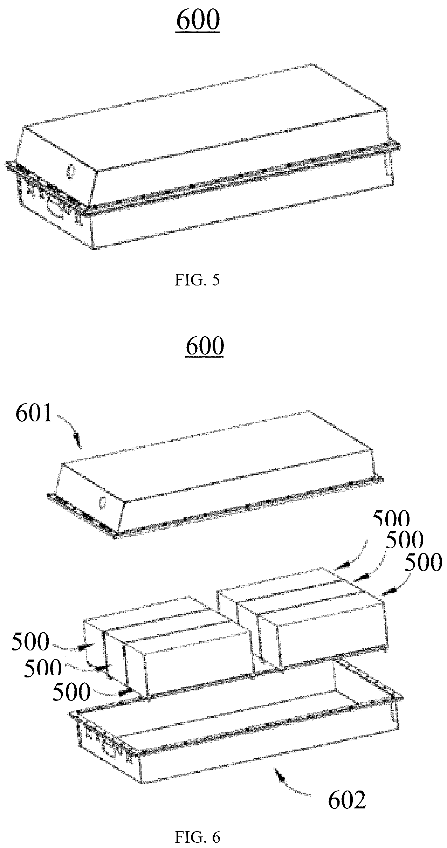

FIG. 5 and FIG. 6 show the battery pack 600 as an example. Referring to FIG. 5 and FIG. 6, the battery pack 600 may comprise a battery box and the plurality of battery modules 500 arranged in the battery box. The battery box comprises an upper box body 601 and a lower box body 602. The upper box body 601 can cover the lower box body 602 to form an enclosed space for accommodating the battery modules 500. The plurality of battery modules 500 may be arranged in the battery box in any manner.

In addition, the present application further provides an electric apparatus comprising the lithium-ion battery provided in the present application. The lithium-ion battery, the battery module or the battery pack may be used as a power source of the electric apparatus and may also be used as an energy storage unit of the electric apparatus. The electric apparatus may include mobile devices (such as a mobile phone and a notebook computer), electric vehicles (such as a full electric vehicle, a hybrid electric vehicle, a plug-in hybrid electric vehicle, an electric bicycle, an electric scooter, an electric golf vehicle and an electric trunk), electric trains, ships, satellites, energy storage systems, etc., but is not limited thereto.

The embodiments of the present application are illustrated below. The embodiments described below are exemplary, are used to explain the present application only and cannot be construed as limiting the present application. The specific techniques or conditions that are not specified in the embodiments are performed in accordance with the techniques or conditions described in the literature in the art or in accordance with the specification of the product. The reagents or instruments used do not indicate manufacturers and are all conventional products that can be purchased on the market.

### Comparative Example 1

(1) Preparation of the electrolyte solution: mixing ethylene carbonate (EC) and diethyl carbonate (DEC) in an argon atmosphere glovebox with a water content less than 10 ppm at a mass ratio of 3:7, adding a corresponding proportion of lithium hexafluorophosphate (LiPF₆), and dissolving completely to prepare the electrolyte solution with 1 mol/L of LiPF₆.
(2) Preparation of the negative electrode slurry: mixing graphite, conductive carbon black (SP), sodium carboxymethyl cellulose (CMC) and styrene butadiene rubber (SBR) at a mass ratio of 96.5:1.5:1:1, adding water as a solvent, and conducting stirring to form the negative electrode slurry with the solid content of 60%.
(3) Preparation of the negative electrode plate: taking the copper foil as the negative electrode current collector, and coating the negative electrode slurry onto the two sides of the copper foil, wherein the coating width of the negative electrode slurry is 75 mm, and a coating surface density is 12 mg/cm²; conducting drying and roll-pressing to obtain the required negative electrode plate with a uniform thickness.
(4) Preparation of the positive electrode slurry: mixing LiNi_{0.6}Co_{0.2}Mn_{0.2}O₂ (NCM622), conductive carbon black, carbon nanotubes and polyvinylidene difluoride (PVDF) at a mass ratio of 95.5:2:0.5:2, adding an N-methyl pyrrolidone (NMP) solvent, and conducting stirring to form the positive electrode slurry.
(5) Preparation of the positive electrode plate: taking the aluminum foil as the positive electrode current collector, and coating the positive electrode slurry onto the two sides of the aluminum foil, wherein the coating width of the positive electrode slurry is 70 mm, and a coating surface density is 20 mg/cm²; conducting drying and roll-pressing to obtain the required positive electrode plate with a uniform thickness.
(6) Preparation of the separator film: using a polyethylene (PE) film as the separator film.
(7) Preparation of the lithium-ion battery: stacking and winding the positive electrode plate, the separator film and the negative electrode plate in sequence to obtain the electrode assembly; mounting the electrode assembly into an aluminum outer shell, welding a top cover, after drying, injecting the electrolyte solution in Comparative Example 1, and carrying out standing, formation, seal-welding, aging, capacity grading and other processes to obtain the lithium-ion battery.

### Examples 1 to 8

The preparation steps in Examples 1 to 8 are the same as those in Comparative Example 1, and the difference is that the electrolyte solution in Step (1) is prepared by adding 1,2,4-triazole at the mass ratios of 0.1%, 0.3%, 0.5%, 0.7%, 1.0%, 1.5%, 2.0% and 3.0% respectively corresponding to Examples 1 to 8 based on the electrolyte solution in Comparative Example 1.

### Examples 9 to 12

The preparation steps in Examples 9 to 12 are the same as those in Comparative Example 1, and the difference is that the electrolyte solution in Step (1) is prepared by adding 1,2,4-triazole at the mass ratios of 0.5% based on the electrolyte solution in Comparative Example 1 and then adding ethylene sulfate at mass ratios of 0.1%, 0.3%, 0.5% and 1.0% respectively corresponding to Examples 9 to 12.

### Comparative Examples 2 to 5

The preparation steps in Comparative Examples 2 to 5 are the same as those in Comparative Example 1, and the difference is that the electrolyte solution in Step (1) is prepared by adding ethylene sulfate at mass ratios of 0.1%, 0.3%, 0.5% and 1.0% respectively corresponding to Comparative Examples 2 to 5 based on the electrolyte solution in Comparative Example 1.

### 1. Electrolyte solution storage testing

Taking the electrolyte solutions in Comparative Examples 1 to 5 and Examples 1 to 12, carrying out storage in drying ovens at 60°C, carrying out colorimetric analysis on the electrolyte solutions every other day, and carrying out chromaticity testing by a chromaticity tester method, testing results shown as Table 1. According to practical use standards, it is generally stated that the electrolyte solutions deteriorate obviously if chromaticity exceeds 30 and cannot be applied to products any longer.

Testing conditions: temperature 20-26°C, RH<80%; Model of Chromaticity Tester: Changchun JIDA-cygnet Chromaticity Tester GDYS-101SB.

**TABLE 1**

| Serial numbers of electrolyte solutions | Content of 1,2,4-triazole | Content of ethylene sulfate | 60°C storage of electrolyte solutions, Number of days at chromaticity beyond |
|---|---|---|---|
| | | | 30 |
| Comparative Example 1 | 0 | 0 | 4 |
| Example 1 | 0.10% | 0 | 12 |
| Example 2 | 0.30% | 0 | 21 |
| Example 3 | 0.50% | 0 | 24 |
| Example 4 | 0.70% | 0 | 25 |
| Example 5 | 1.00% | 0 | 27 |
| Example 6 | 1.50% | 0 | 27 |
| Example 7 | 2.00% | 0 | 28 |
| Example 8 | 3.00% | 0 | 28 |
| Example 9 | 0.50% | 0.10% | 24 |
| Example 10 | 0.50% | 0.30% | 24 |
| Example 11 | 0.50% | 0.50% | 24 |
| Example 12 | 0.50% | 1.00% | 24 |
| Comparative Example 2 | 0 | 0.10% | 4 |
| Comparative Example 3 | 0 | 0.30% | 4 |
| Comparative Example 4 | 0 | 0.50% | 4 |
| Comparative Example 5 | 0 | 1.00% | 4 |

It can be known through chromaticity testing above that the chromaticity exceeds a standard after the electrolyte solution in Comparative Example 1 is stored for 4 days, and with an increase of the content of 1,2,4-triazole, the time of chromaticity exceeding the standard is prolonged obviously; when the content of 1,2,4-triazole is 0.3%-0.5%, the shelf life of the electrolyte solution is prolonged to 20 days or more, which shows that the 1,2,4-triazole has an effect on inhibiting the decomposition of the lithium salt in the electrolyte solution and further inhibit polymerization of organic solvents EC and DEC, and the electrolyte solution provided in the present application has a long shelf life.

### 2. A method for testing an increase rate of DCR

At -10°C, the lithium-ion batteries prepared in the examples and comparative examples are charged at a rate of 0.1C while a voltage U1 is recorded and then are discharged at a rate of 0.3C while a voltage U2 is recorded, thereby forming a charge-discharge cycle, DCR=(U1-U2)/0.3C. The batteries are cyclically charged and discharged for 200 cycles in this way, the DCR in Cycle 200 is recorded and divided by the DCR in Cycle 1 minus 1 to obtain the increase rate of the DCR in Cycle 200. It should be particularly noted that the batteries can be used normally when charged and discharged at the rate, and the problems such as lithium plating of the batteries can be avoided. Testing results are shown in Table 2.

**TABLE 2**

| Serial numbers of electrolyte solutions | Content of 1,2,4-triazole | Content of ethylene sulfate | DCR increase rate of 200 cycles at -10°C |
|---|---|---|---|
| Comparative Example 1 | 0 | 0 | 150% |
| Example 1 | 0.10% | 0 | 87% |
| Example 2 | 0.30% | 0 | 71% |
| Example 3 | 0.50% | 0 | 63% |
| Example 4 | 0.70% | 0 | 72% |
| Example 5 | 1.00% | 0 | 71% |
| Example 6 | 1.50% | 0 | 73% |
| Example 7 | 2.00% | 0 | 72% |
| Example 8 | 3.00% | 0 | 72% |
| Example 9 | 0.50% | 0.10% | 42% |
| Example 10 | 0.50% | 0.30% | 31% |
| Example 11 | 0.50% | 0.50% | 29% |
| Example 12 | 0.50% | 1.00% | 35% |
| Comparative Example 2 | 0 | 0.10% | 115% |
| Comparative Example 3 | 0 | 0.30% | 101% |
| Comparative Example 4 | 0 | 0.50% | 93% |
| Comparative Example 5 | 0 | 1.00% | 99% |

It can be known through performance testing of the lithium-ion batteries that the electrolyte solution provided in the present application can effectively reduce the DCR increase rate of the battery in low-temperature cycles, thereby improving the performance of the battery. However, the electrolyte solution containing ethylene sulfate further reduces the DCR increase rate of the battery in low-temperature cycles, thereby further improving the performance of the battery.

It should be noted that the present application is not limited to the above-mentioned implementations. The above-mentioned implementations are merely examples, and within the scope of the technical solutions of the present application, implementations that have substantially the same configuration as the technical idea and exert the same effects are included in the technical scope of the present application. In addition, without departing from the scope of the present application, various modifications conceivable by those skilled in the art are added to the embodiments, and other forms constructed by combining some components in the embodiments are also included in the scope of the present application.

## Claims

1. An electrolyte solution, comprising:
a solvent, a lithium salt and a first additive;
the first additive having a molecular formula of 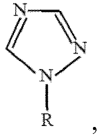
wherein R is at least one of an H element, a halogen element or an alkyl group having 1 to 3 carbon atoms.

2. The electrolyte solution according to claim 1, wherein the R is the H element, and the first additive is 1,2,4-triazole.

3. The electrolyte solution according to claim 1 or claim 2, wherein based on 100 parts by weight of the electrolyte solution, the amount of the first additive is 0.1-3 parts by weight.

4. The electrolyte solution according to any one of claims 1 to 3, further comprising a second additive which is ethylene sulfate.

5. The electrolyte solution according to claim 4, wherein based on 100 parts by weight of the electrolyte solution, the amount of the second additive is 0.1-1 part by weight.

6. The electrolyte solution according to any one of claims 1 to 5, wherein a molar concentration of the lithium salt in the solvent is 0.8-1.5 mol/L.

7. The electrolyte solution according to any one of claims 1 to 6, wherein the solvent comprises at least one of diethyl carbonate, methyl ethyl carbonate, propylene carbonate, dimethyl carbonate, ethylene carbonate, ethyl acetate and ethyl propionate.

8. The electrolyte solution according to claim 6, wherein the solvent comprises ethylene carbonate and diethyl carbonate, and a mass ratio of the ethylene carbonate to the diethyl carbonate is 3:7.

9. A lithium-ion battery comprising the electrolyte solution according to any one of claims 1 to 8.
